# EUROPÄISCHE PATENTSCHRIFT

(11) **EP 0 338 299 B1**
(45) Veröffentlichungstag und Bekanntmachung des Hinweises auf die Patenterteilung: **27.07.1994**
(21) Anmeldenummer: 89105753.1
(22) Anmeldetag: 01.04.1989
(51) Int. Cl.: B60M 1/24

(54) **Spurhalterklemme für den Fahrdraht elektrischer Bahnsysteme**
Anchor arm clamp for the contact wire of electrical railway systems
Pince de bras d'ancrage pour le fil de contact d'ensembles de chemin de fer électrique

(30) Priorität: 20.04.1988 CH 1453/88; 13.10.1988 CH 3823/88
(43) Veröffentlichungstag der Anmeldung: 25.10.1989
(73) Patentinhaber: GEORG FISCHER AKTIENGESELLSCHAFT, CH-8201 Schaffhausen (CH)
(72) Erfinder: Roth, Adolf, CH-8211 Stetten (CH); Trottmann, Bruno, CH-8200 Schaffhausen (CH)

(56) Entgegenhaltungen:
- DE-A- 2 331 808
- DE-C- 929 194
- US-A- 1 594 927

## Beschreibung

Die Erfindung betrifft eine Spurhalterklemme für den Fahrdraht elektrischer Bahnsysteme wie sie im Oberbegriff von Anspruch 1 gekennzeichnet ist.

Bekannt sind zweiteilige Fahrdrahtklemmen, wobei die Klemmbacken in nutförmige Ausnehmungen des Fahrdrahtes eingreifen und dabei einen Druck auf die Fahrdrähte ausüben.

Durch die DE-C-929 194 ist eine derartige Klemme bekanntgeworden, deren Klemmhälften mittels zwei Schrauben zusammenspannbar sind, wobei zum Einsetzen des Spurhalter-Anschlusszapfens die beiden Schrauben vollständig gelöst werden müssen.

Beim Montieren der Klemme am Spurhalter-Anschlusszapfen müssen somit mehrere lose Teile miteinander verbunden werden, was sehr zeitaufwendig ist. Durch die Anordnung von zwei Schrauben muss die Klemme entsprechend lang ausgebildet werden, was sehr materialaufwendig ist.

Die Schrift DE-A-23 31 808 zeigt eine entsprechende Seitenhalterklemme mit zwei Schrauben und zusätzlich einem Drahtbügel, welcher über die beiden Klemmteile gesteckt wird. Aus dieser Schrift is zu entnehmen, dass die beiden Klemmhälften zuerst auf den Spurhalter-Anschlusszapfen gesteckt werden, danach wird der Drahtbügel aufgeschoben, wonach die Nuten der Klemmhälften am Fahrdraht eingesetzt werden. Erst am Ende werden die Schrauben eingesetzt und mit den Muttern arretiert. Bei der Montage sind somit sieben lose Teile zu verbinden, die offensichtlich einzeln angeliefert werden. Der Drahtbügel wird nur aufgesteckt und ist nicht durch eine Öffnung der Klemmteile gesteckt.

Die in der Schrift US-A-1,594,927 gezeigte Spurhalterklemme zeigt zwar nur eine Spannschraube, doch entspricht die Klemme nicht der Gattung des Anmeldegegenstandes, da diese an einem Haltekabel angeklemmt wird und nicht wie beim Anmeldegegenstand mit einem Spurhalter-Anschlusszapfen schwenkbar verbunden wird.

Aufgabe der vorliegenden Erfindung ist die Schaffung einer Spurhalterklemme für Fahrdrähte der eingangs genannten Art, welche im zusammengesetzten Anlieferungszustand zur Vermeidung von losen Teilen an dem Spurhalter-Anschlusszapfen befestigbar ist und gleichzeitig den Fahrdraht klemmt.

Erfindungsgemäss wird diese Aufgabe durch die kennzeichnenden Merkmale von Anspruch 1 gelöst.

Besonders vorteilhafte Ausführungen der Spurhalterklemme sind in den abhängigen Ansprüchen gekennzeichnet.

Die Erfindung ist in mehreren Ausführungsbeispielen in den beiliegenden Zeichnungen dargestellt und nachfolgend beschrieben. Es zeigen:
- Fig. 1: eine Frontansicht einer Spurhalterklemme mit Drahtbügel
- Fig. 2: eine Seitenansicht von Fig. 1
- Fig. 3: eine Draufsicht von Fig. 1
- Fig. 4: eine Frontansicht einer Ausführungsvariante von Fig. 1
- Fig. 5: eine Seitenansicht von Fig. 4
- Fig. 6: eine Draufsicht von Fig. 4
- Fig. 7: eine Frontansicht einer weiteren Ausführungsvariante von Fig. 1
- Fig. 8: eine Seitenansicht von Fig. 7
- Fig. 9: eine Draufsicht von Fig. 7
- Fig. 10: eine Frontansicht einer weiteren Ausführungsvariante von Fig. 1 mit seitlich versetzter Schraube
- Fig. 11: eine Seitenansicht von Fig. 10 und
- Fig. 12: eine Draufsicht von Fig. 10.

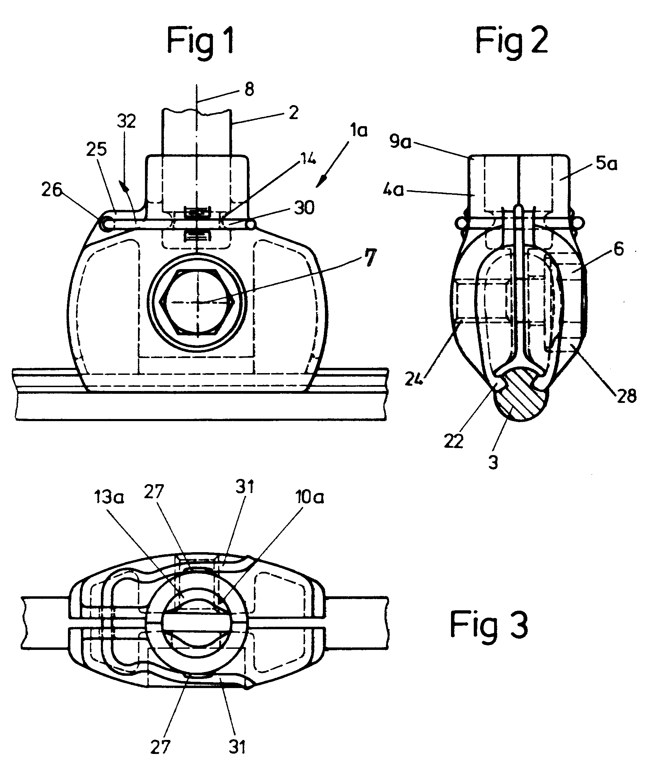

Die Fig. 1 bis 3 zeigen eine Spurhalterklemme 1a, welche zur schwenkbaren Befestigung an einem Spurhalter-Anschlusszapfen 2 und zur Halterung durch Klemmwirkung eines Fahrdrahtes 3 von elektrischen Bahnsystemen ausgebildet ist.

Die Spurhalterklemme 1 besteht aus zwei Klemmteilen 4a und 5a, welche mittels einer Schraube 6 zusammengespannt werden. Die Schraubenachse 7 verläuft mittig quer zur Zapfenachse 8, wobei die Schraube 6 unterhalb einer Halterung 9a für den Spurhalter-Anschlusszapfen 2 angeordnet ist. Als Schraube wird vorzugsweise eine Schraube mit Sechskant und anschliessendem Bund verwendet, wobei an der Stirnfläche des Bundes radial verlaufende Zähne als Schraubensicherung angeordnet sind. Die Schraube 6 wird in ein Gewinde 24 des Klemmteils 4a eingeschraubt. Der Schraubenkopf ist in einer Ausnehmung 28 des Klemmteils 5a derart versenkt angeordnet, dass er mit der Aussenkontur des Klemmteils eine bestimmte und vorgeschriebene Flankenfreiheit gewährleistet.

Die Spurhalterklemme 1a ist mit einem federnden Drahtbügel 30 versehen.

Die beiden Klemmteile 4a, 5a weisen seitlich der Halterung 9a je eine in Rippen 25 angeordnete Bohrung 26 auf, in welchen der U-förmige Bügel 30 schwenkbar angeordnet ist. Die beiden federnd ausgebildeten Schenkel 31 des Bügels 30 liegen an den Klemmteilen 4a, 5a im Bereich der Halterung 9a an und werden dort zwischen den Nocken 27 gehalten. Die Halterung 9a weist symmetrisch ausgebildete, halbschalenförmige Ausnehmungen 10a auf, in welchen je ein Wulst 13a angeordnet ist. Wird der Drahtbügel 30 gemäss Pfeil 32 nach oben geschwenkt, können durch die teilweise gelöste Schraube 6 die beiden Klemmteile 4a, 5a so weit voneinander getrennt werden, dass die Spurhalterklemme 1a auf den Spurhalter-Anschlusszapfen geschoben werden kann, wobei dann nach Zurückschwenken des Bügels 30 die Spurhalterklemme 1a am Spurhalter-Anschlusszapfen 2 festgehalten wird. Beim Einführen des Spurhalter-Anschlusszapfens 2 wird dieser mit dem in einer Ringnute 14 liegenden Wülsten 13a axial gehalten.

Durch den federelastischen Drahtbügel 30 können dann die Klemmbakkenpartien 22 so weit auseinandergedrückt werden, dass der Fahrdraht 3 dazwischen eingelegt werden kann, wobei die endgültige Klemmung des Fahrdrahtes durch Anziehen der Schraube 6, wie bereits beschrieben, erfolgt.

Durch die beschriebene Montage kann die Spurhalterklemme 1 vormontiert ohne lose Teile angeliefert und am Spurhalter-Anschlusszapfen 2 eingehängt werden und für die endgültige Montage am Spurhalter-Anschlusszapfen 2 und die Befestigung des Fahrdrahtes 3 muss nur eine Schraube angezogen werden.

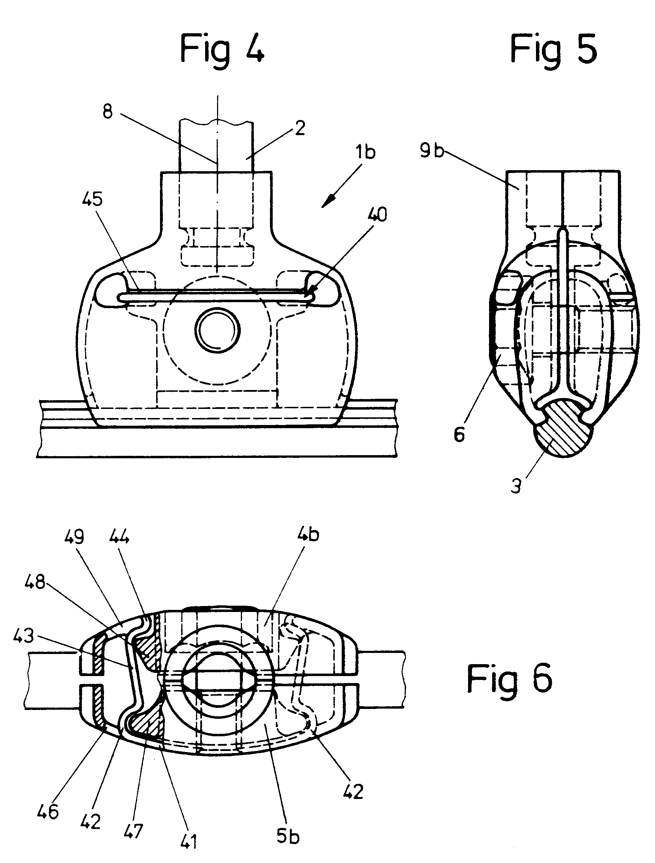

Die Fig. 4 bis 6 zeigen eine Ausführungsvariante einer Spurhalterklemme 1b mit einem U-förmigen Drahtbügel 40. Der Bügel 40 weist einen Steg 41 mit beidseitigen halbkreisförmigen Bögen 42 auf, an denen Schenkel 43 angeordnet sind. Die Enden 44 der Schenkel 43 sind einwärts S-förmig abgebogen.

Der Drahtbügel 40 ist mit seinem Steg 41 in einer Rille 45 liegend und mit den Bögen 42 eine nasenförmige Wand 47 einer Öffnung 46 umgreifend formschlüssig in dem einen Klemmteil 5b gehalten.

Die einwärts gebogenen Enden 44 der Schenkel 43 umgreifen Nasen 48 des anderen Klemmteils 4b, wobei die Enden in Öffnungen 49 dieses Klemmteils zu liegen kommen. Durch die formschlüssige Halterung des Drahtbügels 40 werden die beiden Klemmteile 4b, 5b auch bei etwas gelöster Schraube 6 zusammengehalten. Zur Montage auf dem Spurhalter-Anschlusszapfen 2 können die bieden Klemmteile 4b, 5b so weit auseinandergeschoben werden, dass die Spurhalterklemme mit der Halterung 9b auf den Spurhalter-Anschlusszapfen schiebbar ist. Die Ausbildung der Halterung 9b entspricht der zu den Fig. 1 bis 3 beschriebenen Spurhalteklemme.

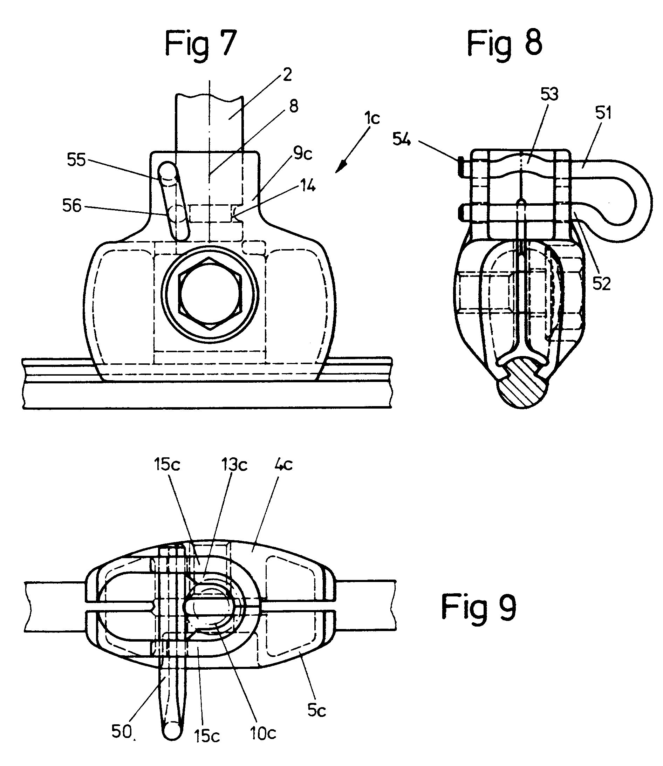

Bei der in den Fig. 7 bis 9 gezeigten Ausführungsvariante einer Spurhalterklemme 1c wird der Spurhalter-Anschlusszapfen 2 durch einen in die Halterung 9c der beiden Klemmteile 4c, 5c eingesteckten, als Federsplint ausgebildeten Drahtbügel 50 fixiert, welcher zwei Schenkel 51 und 52 aufweist.

Die Halterung 9c weist eine U-förmige Ausnehmung 10c auf, welche sich aus zwei symmetrischen, jeweils in den beiden Klemmteilen 4c, 5c angeordneten Hälften zusammensetzt, wobei die Symmetrieachse in Richtung der Fahrdrahtachse verläuft. In der Ausnehmung 10c ist ein entsprechender U-förmiger Wulst 13c angeordnet. In den seitlichen Wänden 15c der Halterung 9c sind je zwei Löcher 55 und 56 angeordnet, welche mit unterschiedlicher seitlicher Distanz zur Zapfenachse 8 übereinander liegen.

Die oberen Löcher 55 sind als Langlöcher ausgebildet, damit der, eine bogenförmige Partie 53 aufweisende Schenkel 51 eingesteckt werden kann. Der untere Schenkel 52 wird in die Löcher 56 eingesteckt, wobei er dann in der Ringnute 14 des Spurhalter-Anschlusszapfens 2 zu liegen kommt. Am Ende des oberen Schenkels 51 ist eine Nase 54 angeordnet, welche als Verliersicherung beim Zurückschieben des Federsplints 50 dient.

Zur Montage dieser Spurhalterklemme 1c am Spurhalter-Anschlusszapfen 2 wird der Federsplint 50 so weit zurückgezogen, dass die Öffnung der U-förmigen Ausnehmung 10c frei ist, damit die Spurhalterklemme 1c auf den Spurhalter-Anschlusszapfen 2 so aufgeschoben werden kann, dass der Wulst 13c in der Nute 14 des Spurhalter-Anschlusszapfens 2 zu liegen kommt. Durch den Anschlag der Nase 54 an der vorderen Innenwand der Ausnehmung 10c kann der Federsplint 50 nicht ohne übermässige Einfederung vollkommen herausgezogen werden, so dass auch bei dieser Ausführung bei der Montage keine losen Teile vorhanden sind.

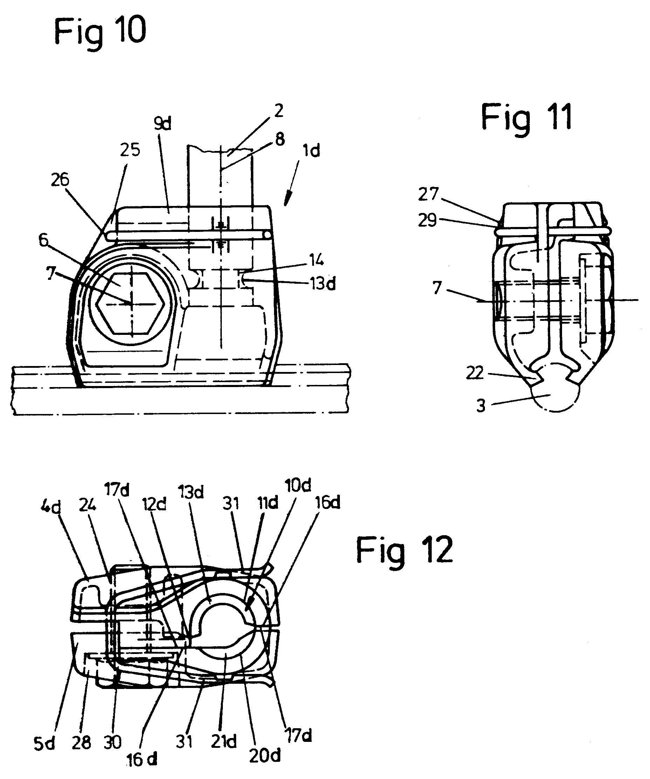

Die Spurhalterklemme 1 gemäss den Fig. 10 bis 12 besteht aus zwei Klemmteilen 4d und 5d, welche mittels einer wie zu den Fig. 1 bis 3 beschriebenen Schraube 6 zusammengespannt werden. Die Schraubenachse 7 verläuft seitlich versetzt quer zur Zapfenachse 8, wobei die Schraube 6 seitlich einer Halterung 9d für den Spurhalter-Anschlusszapfen 2 angeordnet ist. Die Schraube 6 wird in ein Gewinde 24 des Klemmteils 4d eingeschraubt. Der Schraubenkopf ist in einer Ausnehmung 28 des Klemmteils 5d derart versenkt angeordnet, dass er mit der Aussenkontur des Klemmteils eine bestimmte und vorgeschriebene Flankenfreiheit gewährleistet.

Die Halterung 9d weist eine in einem Klemmteil 4d angeordnete Ausnehmung 10d auf, welche eine Halbkreis-Zylinderfläche 11d mit auf einer Seite einer sich daran anschliessenden quer zur Fahrdrahtrichtung verlaufenden Fläche 12d aufweist. In dieser Ausnehmung 10d ist eine Wulst 13d angeordnet, welcher in einer Ringnut 14 des eingesetzten Spurhalter-Anschlusszafpens 2 eingreift.

Die Ausnehmung 10d im Klemmteil 4d wird durch Anlageflächen 16d und 17d begrenzt, von denen eine Anlagefläche 16d in einer durch die Zapfenachse 8 gehende Ebene und die andere in Richtung des Klemmteils 5d seitlich und dazu parallelen Ebene verläuft.

Das Klemmteil 5d weist eine teilkreisförmige Ausnehmung 20d mit einem entsprechenden Wulst 21d auf. Die Ausnehmungen 10d und 20d bilden somit eine im wesentlichen zylindrische Bohrung zur Aufnahme des Spruhalter-Anschlusszapfens 2.

Das Klemmteil 5d weist ebenfalls Anlageflächen 16d und 17d auf, welche beim Zusammenspannen der beiden Klemmteile 4d, 5d an den entsprechenden Anlageflächen des Klemmteiles 4d anliegen.

Das Klemmteil 4d weist seitlich der Halterung 9d eine in einer Rippe 25 angeordnete Bohrung 26 auf, in welcher ein U-förmiger Drahtbügel 30 schwenkbar angeordnet ist. Die beiden federnd ausgebildeten Schenkel 31 des Drahtbügels 30 liegen an den Klemmteilen 4d, 5d im Bereiche der Halterung 9d an und werden dort zwischen den Vorsprüngen 27 in als Rasten ausgebildeten Nuten 29 gehalten.

Jedes der Klemmteile 4d, 5d weist eine Klemmbackenpartie 22 auf, welche für den Eingriff in im Fahrdraht 3 angeordnete Rillen ausgebildet ist.

Für die Montage der Spurhalteklemme 1d an dem Spurhalter-Anschlusszapfen 2 ist die Schraube 6 geringfügig gelöst, wodurch das Klemmteil 5d um die Schraubenachse 7 so weit verschwenkt werden kann, dass die gesamte Ausnehmung 10d von vorn zum Einführen des Spurhalter-Anschlusszapfens 2 zugänglich ist.

Beim Einführen des Spurhalter-Anschlusszapfens 2 wird dieser mit dem in der Ringnut 14 liegenden Wulst 13d axial gehalten, wobei beim Zurückschwenken des Klemmteils 5d der Wulst 21d ebenfalls in die Nut 14 eingeführt wird.

Anschliessend werden die Schenkel 31 des Drahtbügels 30 über die Halterung 9d der Klemmteile 4d, 5d geschwenkt und in der Nut 29 zum Einrasten gebracht.

Die Spurhalterklemme 1d ist dann am Spurhalter-Anschlusszapfen 2 ohne anziehen der Schraube 6 gehalten, wobei die Klemmbackenpartien 22 der beiden Klemmteile 4d, 5d gegen den Federdruck des Drahtbügels 30 auseinandergedrückt werden können, damit der Fahrdraht 3 dazwischen eingeführt und durch Anziehen der Schraube 6 festgeklemmt werden kann. Dabei kommt das Klemmteil 5d mit den Anlageflächen 16d und 17d fest an entsprechenden Anlageflächen 16d, 17d des Klemmteils 4d zur Anlage.

Durch die beschriebene Montage kann die Spurhalterklemem 1d vormontiert ohne lose Teile angeliefert und am Spurhalter-Anschlusszapfen 2 eingehängt werden und für die endgültige Montage am Spurhalter-Anschlusszapfen 2 und die Befestigung des Fahrdrahtes 3 muss nur eine Schraube angezogen werden.

Durch die seitliche Anordnung der Schraube 6 zur Halterung 9d für den Spurhalter-Anschlusszapfen 2 ist eine Ausbildung der Spurhalterklemme 1d mit einer geringen Bauhöhe zwischen dem Fahrdraht und der Anhängung mittels des Spurhalter-Anschlusszapfens gewährleistet. Da hierbei auch die Schwerachse jedes Klemmteiles zwischen der Schraubenachse und der Zapfenachse zu liegen kommt, bleibt der Klemmteil 5d beim Einführen des Spurhalter-Anschlusszapfens in der verschwenkten Lage, wodurch die Montage erleichtert wird.

Durch die exzentrische Anordnung der Spurhalterklemme 1d bezüglich des Spurhalter-Anschusszapfens 2 entsteht eine dämpfende Wirkung auf die Schwingungen des Fahrdrahtes.

## Patentansprüche

1. Spurhalterklemme für den Fahrdraht (3) elektrischer Bahnsysteme, welche zwei mittels Schrauben (6) zusammenspannbare Klemmteile (4, 5) aufweist, mit einer in eine Ringnute (14) eines Spurhalter-Anschlusszapfens (2) eingreifenden, einen Ringwulst (13) aufweisenden Halterung (9) für eine schwenkbare Aufhängung der Spurhalterklemme, dadurch gekennzeichnet, dass die beiden Klemmteile (4a, 4b, 4c, 4d, 5a, 5b, 5c, 5d) mittels nur einer Schraube (6) gegeneinander bei gleichzeitiger Klemmung des Fahrdrahtes (3) verspannt werden, dass die beiden Klemmteile (4a, 4b, 4c, 4d, 5a, 5b, 5c, 5d) bei teilweise gelöster Schraube (6) auf den Spurhalter-Anschlusszapfen (2) aufgebracht werden und in der Ringnute (14) ohne Anziehen der Schraube (6) mittels eines durch mindestens eine Öffnung (26, 46, 49, 55, 56) in mindestens einem der Klemmteile (4a, 4b, 4c, 4d, 5a, 5b, 5c, 5b) gesteckten Drahtbügels (30, 40, 50) im nicht zusammengespannten Zustand zusammengehalten werden.

2. Spurhalterklemme nach Anspruch 1, dadurch gekennzeichnet, dass die Schraubenachse (7) seitlich der Zapfenachse (8) und quer zu dieser verläuft.

3. Spurhalterklemme nach Anspruch 1, dadurch gekennzeichnet, dass die Schraubenachse quer und mittig zur Zapfenachse (8) verläuft.

4. Spurhalterklemme nach einem der Ansprüche 1 bis 3, dadurch gekennzeichnet, dass der Drahtbügel (30) in mindestens einem seitlich der Halterung (9a, 9d) angeordneten Loch (26) verschwenkbar gehalten ist und beidseitig je einen an den Klemmteilen (4a, 4d, 5a, 5d) federnd anliegenden Schenkel (31) aufweist, der in Nuten (29) einrastet.

5. Spurhalterklemme nach einem der Ansprüche 2 oder 4, dadurch gekennzeichnet, dass eine der gegenseitigen Anlageflächen (17d) der Klemmteile (4d, 5d) zu der durch die Zapfenachse (8) verlaufenden Trennebene seitlich versetzt und parallel dazu verlaufend angeordnet ist, wobei das Klemmteil (5d) zum Einführen des Spurhalter-Anschlusszapfens (2) in die Halterung (9d) um die Schraubenachse (7) bei teilweise gelöster Schraube (6) verschwenkbar ausgebildet ist.

6. Spurhalterklemme nach einem der Ansprüche 2, 4 oder 5, dadurch gekennzeichnet, dass ein Klemmteil (4d) ein in einer Rippe (25) angeordnetes Loch (26) aufweist, in welchem der Drahtbügel (30) verschwenkbar angeordnet ist.

7. Spurhalterklemme nach einem der Ansprüche 1, 2 oder 5, dadurch gekennzeichnet, dass der Drahtbügel (40) U-förmig ausgebildet mit dem Steg (41) an einem Klemmteil (5b) anliegend und die beiden Schenkel (43) in beidseits der Zapfenachse (8) angeordneten Oeffnungen (46, 49) steckend gehalten ist, dass die beiden Schenkel (43) einwärts gebogene Enden (44) aufweisen, welche die an einem Klemmteil (4b) integriert angeordente Nasen (48) umfassen.

8. Spurhalterklemme nach einem der Ansprüche 1, 2 oder 5, dadurch gekennzeichnet, dass der Drahtbügel (50) als Federsplint ausgebildet ist, welcher in zwei in der Halterung (9c) der Klemmteile (4c, 5c) seitlich der Zapfenachse (8) angebrachten Löchern (55, 56) angeordnet ist, wobei ein Schenkel (52) in die Nute (14) des Spurhalter-Anschlusszapfens (2) eingreift.

## Claims

1. Anchor arm clamp for the contact wire (3) of electrical railway systems, which anchor arm clamp has two clamp parts (4, 5) which can be clamped together by means of screws (6), having a mounting (9) for the swivel suspension of the anchor arm clamp, which mounting (9) engages in a ring groove (14) of an anchor arm connection shank (2) and has an annular bead (13), characterised in that the two clamp parts (4a, 4b, 4c, 4d, 5a, 5b, 5c, 5d) are braced against each other by means of only one screw (6), with simultaneous clamping of the contact wire (3), in that the two clamp parts (4a, 4b, 4c, 4d, 5a, 5b, 5c, 5d) are applied to the anchor arm connection shank (2) with the screw (6) partly loosened and are held together, but not clamped together, in the ring groove (14), without tightening of the screw (6), by means of a wire strap (30, 40, 50) inserted through at least one opening (26, 46, 49, 55, 56) in at least one of the clamp parts (4a, 4b, 4c, 4d, 5a, 5b, 5c, 5d).

2. Anchor arm clamp according to claim 1, characterised in that the screw axis (7) extends to the side of the shank axis (8) and transversely relative thereto.

3. Anchor arm clamp according to claim 1, characterised in that the screw axis extends transversely and centrally relative to the shank axis (8).

4. Anchor arm clamp according to one of claims 1 to 3, characterised in that the wire strap (30) is held for swivelling in at least one hole (26) provided at the side of the mounting (9a, 9d) and has on both sides a respective side piece (31) which engages in grooves (29), this side piece fitting in a resilient manner against the clamp parts (4a, 4d, 5a, 5d).

5. Anchor arm clamp according to one of claims 2 or 4, characterised in that one of the mutually opposite bearing surfaces (17d) of the clamp parts (4d, 5d) is arranged so that it is laterally offset relative to the junction plane extending through the shank axis (8) and extends parallel thereto, wherein the clamp part (5d) is formed, for the insertion of the anchor arm connection shank (2) in the mounting (9d), so that it can swivel around the screw axis (7) when the screw (6) is partly loosened.

6. Anchor arm clamp according to one of claims 2, 4 or 5, characterised in that one clamp part (4d) has a hole (26) provided in a rib (25), the wire strap (30) being arranged in this hole (26) for swivelling.

7. Anchor arm clamp according to one of claims 1, 2 or 5, characterised in that the wire strap (40) is formed in a U-shape with the bar (41) bearing against one clamp part (5b), and the two side pieces (43) held inserted in openings (46, 49) arranged in both sides of the shank axis (8), in that the two side pieces (43) have ends (44) bent inwards which surround lugs (48) arranged in an integral manner on one clamp part (4b).

8. Anchor arm clamp according to one of claims 1, 2 or 5, characterised in that the wire strap (50) is formed as a spring cotter pin which is arranged in two holes (55, 56) provided in the mounting (9c) of the clamp parts (4c, 5c) to the side of the shank axis (8), wherein one side piece (52) engages in the groove (14) of the anchor arm connection shank (2).

## Revendications

1. Pince de branche d'ancrage pour le fil de contact (3) des systèmes de traction électrique ferroviaire, présentant deux parties de serrage (4, 5) susceptibles d'être serrées ensemble au moyen de vis (6) avec une attache (9) munie d'un bourrelet annulaire (13) qui s'engage dans une rainure annulaire (14) d'une broche de raccordement de branche d'ancrage (2), l'attache étant prévue pour la suspension articulée de la pince de branche d'ancrage, caractérisée en ce que les deux parties de serrage (4a, 4b, 4c, 4d, 5a, 5b, 5c, 5d) sont serrées au moyen d'une seule vis (6) contre l'autre au moment du serrage simultané du fil de contact (3), en ce que les deux parties de serrage (4a, 4b, 4c, 4d, 5a, 5b, 5c, 5d) sont appliquées sur la broche de raccordement de branche d'ancrage (2) lorsque la vis (6) est partiellement dévissée et sont maintenues assemblées à l'état non serré, dans la rainure annulaire (14) sans serrage de La vis (6), au moyen d'un étrier en fil (30, 40, 50) qui est inséré par au moins une ouverture (26, 46, 49, 55, 56) dans au moins l'une des parties de serrage (4a, 4b, 4c, 4d, 5a, 5b, 5c, 5d).

2. Pince de branche d'ancrage selon la revendication 1, caractérisée en ce que l'axe de la vis (7) est disposé latéralement par rapport à l'axe de la broche (8) et transversalement à ce dernier.

3. Pince de branche d'ancrage selon la revendication 1, caractérisée en ce que l'axe de la vis est disposé transversalement et au centre par rapport à l'axe de broche (8).

4. Pince de branche d'ancrage selon l'une des revendications 1 à 3, caractérisée en ce que l'étrier en fil (30) est maintenu, susceptible de pivoter dans au moins un trou (26) disposé latéralement par rapport à l'attache (9a, 9d) et comporte de chaque côté une branche (31) en appui élastique sur les parties de serrage (4a, 4d, 5a, 5d) et qui vient s'encliqueter dans les rainures (29).

5. Pince de branche d'ancrage selon l'une des revendications 2 ou 4, caractérisée en ce que l'une des surfaces de butée opposées (17d) des parties de serrage (4d, 5d) est décalée latéralement par rapport au plan de séparation passant par l'axe de broche (8) en étant parallèle à cet axe, de sorte que la partie de serrage (5d) est réalisée de façon à pouvoir pivoter autour de l'axe de vis (7) quand la vis (6) est partiellement dévissée, pour permettre l'introduction de la broche de raccordement de branche d'ancrage (2) dans l'attache (9d).

6. Pince de branche d'ancrage selon l'une des revendications 2, 4 ou 5, caractérisée en ce qu'une partie de serrage (4d) comporte un trou (26) disposé dans une nervure (25) et à l'intérieur duquel l'étrier en fil (30) est disposé de façon pivotante.

7. Pince de branche d'ancrage selon l'une des revendications 1, 2 ou 5, caractérisée en ce que l'étrier en fil (40) en forme de U est retenu avec sa branche (41) en contact avec une partie de serrage (5b) et les deux branches (43) enfichées dans des ouvertures (46, 49) disposées des deux côtés de l'axe de la broche (8), en ce que les deux branches (43) comportent des extrémités (44) qui sont repliées vers l'intérieur et qui entourent un bec (48) disposé monobloc avec une partie de serrage (4b).

8. Pince de branche d'ancrage selon l'une des revendications 1, 2 ou 5, caractérisée en ce que l'étrier en fil (50) est réalisé en forme de goupille élastique qui est montée dans deux trous (55, 56) prévus dans l'attache (9c) des parties de serrage (4c, 5c), latéralement par rapport à l'axe de la broche (8), l'une des branches (52) s'engageant dans la rainure (14) de la broche de raccordement de branche d'ancrage (2).
